# EUROPEAN PATENT SPECIFICATION

(11) **EP 1 734 446 B1**
(45) Date of publication and mention of the grant of the patent: **21.11.2012**
(21) Application number: 04807565.9
(22) Date of filing: 22.12.2004
(51) Int. Cl.: G06F 1/32, G06F 1/20, G06F 9/48, G06F 9/38, G06F 9/50

(54) **PROCESSOR, MULTIPROCESSOR SYSTEM, PROCESSOR SYSTEM, INFORMATION PROCESSING DEVICE, AND TEMPERATURE CONTROL METHOD**
PROZESSOR, MEHRPROZESSORSYSTEM, PROZESSORSYSTEM, INFORMATIONSVERARBEITUNGSEINRICHTUNG UND TEMPERATURREGELVERFAHREN
PROCESSEUR, SYSTEME MULTIPROCESSEUR, SYSTEME PROCESSEUR, DISPOSITIF DE TRAITEMENT D'INFORMATIONS, ET PROCEDE DE CONTROLE DE TEMPERATURE

(30) Priority: 29.03.2004 JP 2004096410
(43) Date of publication of application: 20.12.2006
(73) Proprietor: Sony Computer Entertainment Inc., Tokyo 107-0062 (JP)
(72) Inventor: ADACHI, K., SONY COMPUTER ENTERTAINMENT INC., Tokyo 1070062 (JP); YAZAWA, K., SONY COMPUTER ENTERTAINMENT INC., Tokyo 1070062 (JP); TAKIGUCHI, I., SONY COMPUTER ENTERTAINMENT INC., Tokyo 1070062 (JP); IMAI, A., SONY COMPUTER ENTERTAINMENT INC., Tokyo 1070062 (JP); TAMURA, T., SONY COMPUTER ENTERTAINMENT INC., Tokyo 1070062 (JP)
(74) Representative: Turner, James Arthur
(86) International application number: PCT/JP2004/019208
(87) International publication number: WO 2005/093569

(56) References cited:
- EP-A1- 1 096 360
- WO-A1-01/48584
- WO-A1-03/083693
- JP-A- 7 505 244
- JP-A- 10 240 704
- JP-A- 2001 229 040
- JP-A- 2002 202 893
- US-A- 6 000 036
- US-A1- 2002 065 049

## Description

### TECHNICAL FIELD

The present invention relates to a processor technology and, more particularly, to a processor, a multiprocessor system, a processor system, an information processing apparatus and a temperature control method capable of controlling heat value.

### BACKGROUND TECHNOLOGY

As the process of fabrication becomes increasingly finer and components are more highly integrated, heat value has become an important concern in designing an LSI as a parameter indicating a limit of chip performance. As a chip is heated to a high temperature, the chip may operate improperly or the long-term reliability thereof decreases. Therefore, various countermeasures for heat release are taken. For example, a radiator fin may be provided on top of the chip to allow heat from the chip to escape.

Since the distribution of power consumption on a chip is not uniform, the problem of "hot spot", a part of the chip at an abnormally high temperature, cannot be avoided. Accordingly, a study has been made of processor task scheduling based on the distribution of power consumption on a chip (see, for example, patent document No. 1 United States published patent application 2002/0065049).

When a part of a chip release heat, a high-temperature area extends with time into an area surrounding the heated part by heat conduction until the temperature of the whole chip is increased eventually. A related-art countermeasure for heat release is to observe the temperature distribution of the whole chip on a macroscopic scale and radiates heat over time (for example, from several seconds to one minute). As such, time response is poor. Some highly-integrated LSIs fabricated recently consume power on the order of 10-100 KW per chip. Unless heat is radiated in a time span on the order of 10-100 microseconds, mal-operation may be caused due to sudden rise in temperature. In a case where heat is released locally but the chip as a whole is at a safe temperature, lowering the operating frequency of the chip is inefficient in that it results in sacrificing the processing performance of the whole processor. In this background, we have come to be aware of the need to spot an area of heat release when a part of a chip releases heat before a high-temperature area grows by heat conduction and to exercise a countermeasure on a microscopic level for preventing further temperature rise.

### DISCLOSURE OF THE INVENTION

The present invention has been made in view of the aforementioned problems and its object is to provide a processor, a multiprocessor system, a processor system, an information processing apparatus and a temperature control method capable of controlling the heat release of a chip on a very fine scale both in terms of time and space.

The present invention according to one aspect provides a processor fabricated as a chip in which the area occupied by the processor chip is segmented into blocks subject to heat release control, each block having, in operation, a localized peak in heat release, the processor comprising: a heat release frequency holding unit which holds a heat release frequency of a plurality of the blocks, the heat release frequency being a count to which a heat release coefficient is cumulatively added; a heat release coefficient profile which stores, in correspondence with each other, an instruction to be executed, a block involved in the execution of the instruction and a heat release coefficient related to a heat value of the involved block, the heat release coefficient being a numerical value determined from a predicted value of heat generated when the involved block executes the instruction; a heat release identifying unit which identifies, by referring to the heat release coefficient profile, a block involved in the execution of each execution unit comprising at least one instruction, and which identifies a heat release coefficient related to a heat release value of the identified block; and a heat release frequency adder unit which reads the current heat release frequency of the identified block from the heat release frequency holding unit and cumulatively adds the identified heat release coefficient to the current heat release frequency for that block, as the execution of instructions proceeds step by step.

A block is a minimum unit produced by segmenting the processor area. The processor area is segmented into blocks each characterized by a localized peak in heat release. For example, the block may be a discrete component constituting the processor such as a transistor. Alternatively, the block may be a set of some number of components. In the case of multiprocessor that includes a plurality of processors, the block may be a segment in each of the individual processors. Alternatively, the whole processor may represent a block.

An execution unit may be an instruction code comprising each step. Alternatively, an execution unit may be a subroutine or a task constituted by a collection of instruction steps.

The size of a block and the granularity of an execution unit can be flexibly designed depending on the required precision in heat release control and the condition imposed on processor design.

The present invention according to another aspect also provides a method according to claim 5.

According to the present invention, heat value generated from the processor is controlled and mal-operation is prevented, without incurring degradation in processor performance.

### BRIEF DESCRIPTION OF THE DRAWINGS

Embodiments or the invention will now be described with reference to the accompanying drawings in which:
Fig. 1 illustrates the structure of a processor system according to a first embodiment of the present invention;
Fig. 2 is a detailed illustration of functional blocks in the processor system of Fig. 1 involved in heat release control;
Fig. 3 illustrates a heat release coefficient profile;
Fig. 4 illustrates a heat release frequency stored in an operational block heat release frequency register of Fig. 1;
Fig. 5 is a flowchart illustrating a procedure for heat release control in the processor system of Fig. 1; and
Fig. 6 illustrates the structure of a processor system according to a second embodiment of the present invention.

### First embodiment

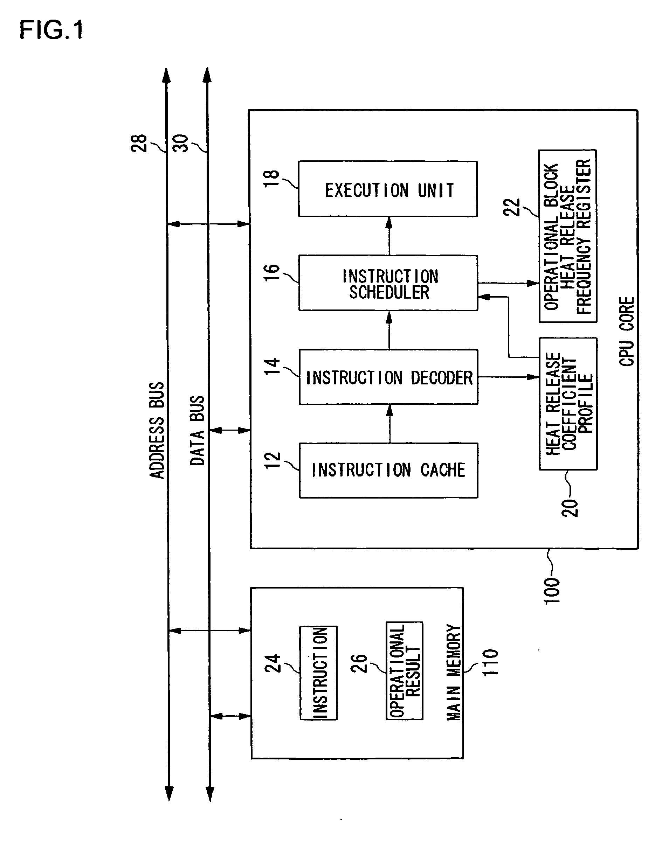

Fig. 1 illustrates the structure of a processor system according to a first embodiment of the present invention. The processor system includes a CPU core 100 and a main memory 110 which are connected to an address bus 28 and a data bus 30. The CPU core 100 designates an address in the main memory 110 and reads and writes data in the main memory 110. The CPU core 100 includes an instruction cache 12, an instruction decoder 14, an instruction scheduler 16, an execution unit 18, a heat release coefficient profile 20 and an operational block heat release coefficient register 22. The main memory 110 stores an instruction 24 and an operational result 26.

The instruction 24 read by the CPU core 100 from the main memory 110 is cached in the instruction cache 12. The instruction decoder 14 sequentially decodes the instruction 24 cached in the instruction cache 12 and supplies the decoded instruction to the instruction scheduler 16. The instruction scheduler 16 schedules the instructions 24 by rearranging the order of execution of the instructions 24 and/or adjusting execution timing in accordance with the dependence on data of each of the instructions 24 decoded by the instruction decoder 14. The execution unit 18 executes the instruction 24 thus scheduled and writes the operational result 26 in the main memory 110.

The whole area occupied by the chip of the processor system chip is segmented into small areas subject to heat release control. Each of the small areas is referred to as a block or an operational block. The operational block may be a discrete transistor constituting the chip or a set of some number of transistors constituting the chip. The chip area is segmented into operational blocks each characterized by a localized peak in heat release. The size of the operational block may be determined as desired so as to meet a target precision in heat release control and specifications required of the processor. The chip area may be segmented into operational blocks of uniform size or segmented according to the borders between the operational units into non-uniform sizes.

The heat release coefficient profile 20 is a stored profile which stores, in correspondence with each other, an instruction step, an operational block of the processor system involved in the execution of the instruction step and a heat release coefficient indicating the heat value of the operational block involved. An operational block heat release frequency register 22 is a register for holding an accumulated total of the heat release frequency of the operational blocks.

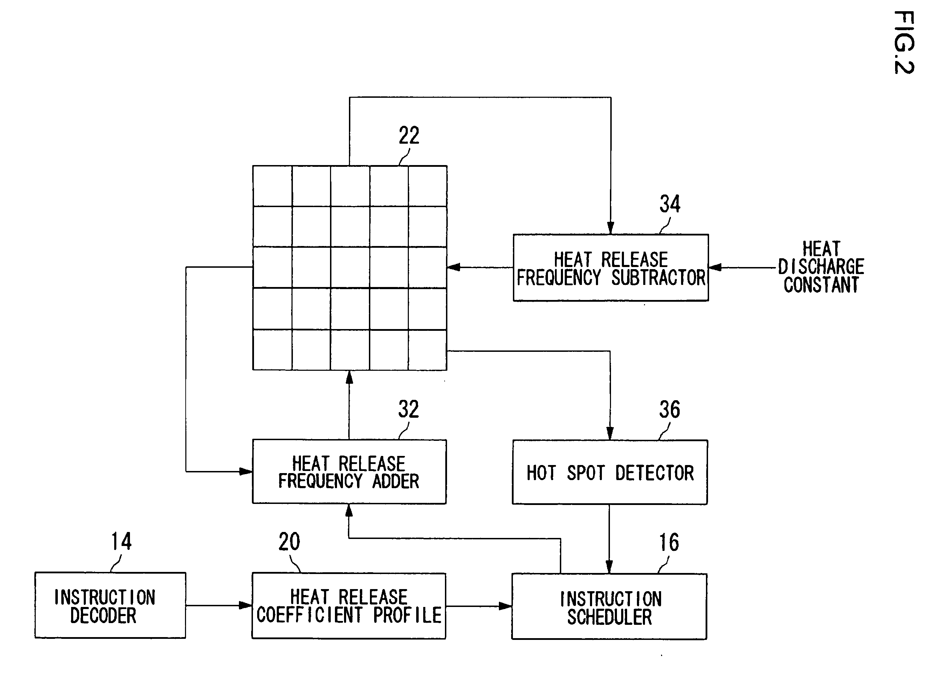

Fig. 2 illustrates functional blocks of the CPU 100 relative to heat release control. The instruction decoder 14 is provided with a function of analyzing heat release. The instruction decoder 14 identifies an operational block involved in the execution of each instruction step by referring to hardware information of the processor system, predicts heat value due to the operation of the identified operational block and determines a heat release coefficient. The instruction decoder 14 stores, in correspondence with each other, an instruction step, information on the location of the identified operational block and the associated heat release coefficient, in the heat release coefficient profile 20.

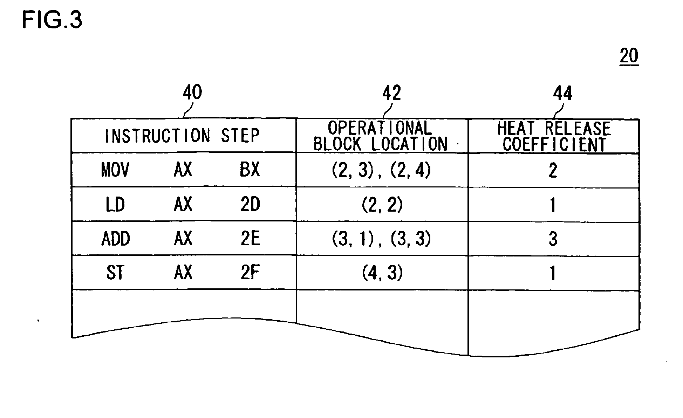

Fig. 3 illustrates an example of the heat release coefficient profile 20. An instruction step 40, an operational block location 42 and a heat release coefficient 44 are stored in the profile in correspondence with each other. The instruction step 40 represents a step-by-step instruction decoded by the instruction decoder 14 and is identified by a command such as MOV (transfer), ADD (addition), LD (load) and ST (store), followed by an argument. For example, the instruction step "MOV AX BX" is an instruction dictating the substitution of the content of an arithmetic register BS of the CPU core 100 into an arithmetic register AX. The instruction step "LD AX 2D" is an instruction dictating the load of data at an address 2D of the main memory 110 into the arithmetic register AX of the CPU 100.

The operational block location 42 is given as an index of matrix occurring when a die on the processor system package is segmented into rectangular areas. The heat release coefficient 44 is a numerical value determined from predicted value of heat generated when the operational block located in an area designated by the operational block location 42 executes the instruction.

By using results collected when the execution of program codes is simulated in a logical simulation conducted upon completion of the LSI layout of the processor system, variation in the on-off condition of the processor transistors can be traced at small time intervals. Using these results allows complete analysis capable of identifying an operational block that goes active in each instruction step.

The heat value of the operational block is predicted by using a CAD tool or the like when designing a circuit in consideration of the static temperature characteristic of the operational block. The static temperature characteristic of the operational block is primarily quantified by referring to the physical characteristics or the relative location of the components. For example, a p-channel transistor and an n-channel transistor of a CMOS are simultaneously turned on when inversion occurs, producing a through current. The through current represents the majority of power consumption of a CMOS. The power consumption increases in proportion to the operating frequency of the CMOS. By estimating the power consumption, the heat value of the operational block can be predicted. The heat release coefficient is a value obtained by quantizing the predicted heat value. The information such as the results of simulation performed when designing the circuit or the predicted heat value can be referred to from the instruction decoder 14 as hardware information.

In the example illustrated in Fig. 3, the execution of the instruction step "MOV AX BX" involves operational blocks located at (2, 3) and (2, 4). The heat release coefficient is 2. The execution of the instruction step "LD AX 2D" requires an operational block at (2, 2) for its execution. The heat coefficient is 1.

Referring back to Fig. 2, the instruction scheduler 16 schedules the instructions 24 decoded by the instruction decoder 14 in accordance with the dependence of each of the instructions on data and selects an instruction step to be executed next. The instruction scheduler 16 refers to the heat release coefficient profile 20 so as to identify the location and the heat release coefficient of the operational block involved in the execution of the selected instruction step and provides the identified information to a heat release frequency adder 32. The heat release frequency adder 32 reads the current heat release frequency of the operational block thus identified from the operational block heat release frequency register 22. The heat release frequency adder 32 adds the heat release coefficient supplied from the instruction scheduler 16 to the heat release frequency thus read and writes the sum to the operational block heat release frequency register 22.

The heat release frequency subtractor 34 reads the heat release frequency of the operational blocks from the operational block heat release frequency register 22 and performs a subtraction process based on a predetermined heat discharge constant. The heat release frequency subtractor 34 writes the result of subtraction in the operational block heat release frequency register 22. The heat release frequency subtractor 34 operates at a predetermined clock and subtracts from the heat release frequency of the operational blocks in the operational block heat release frequency block register 22. With this, heat discharge occurring with time is reflected in the heat release frequency in the operational block heat release frequency register 22.

The heat release frequency subtractor 34 subtracts until the heat release frequency is zero. The larger the heat release frequency of the operational block, the larger the amount of subtraction. This is because the temperature is considered to drop faster due to heat discharge, as a difference between the temperature predicted from the heat release frequency of the operational block and the surrounding temperature grows. A measured value, an estimated value or a preset value may be used as the surrounding temperature.

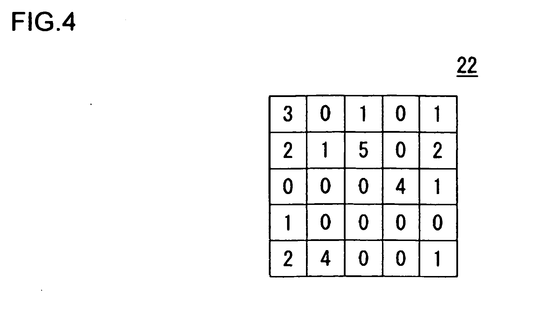

Fig. 4 illustrates an example of heat release frequency stored in the operational block heat release frequency register 22. The heat release frequency of the operational blocks stored in the operational block heat release frequency register 22 is cumulatively increased by the heat release frequency adder 32 as the execution of instructions proceeds. The heat release frequency subtractor 34 subtracts from the accumulated frequency as time elapses.

The heat release frequency adder 32 and the heat release frequency subtractor 34 may adjust the heat release frequency of the operational blocks in consideration of the dynamic aspect of the temperature characteristic of the operational blocks. The dynamic temperature characteristic of the operational blocks primarily depends on the history of execution of tasks or the condition of loads. In some cases, the temperature characteristic is affected by physical conditions. For example, more heat is likely to be generated when a task is simultaneously allocated to adjacent blocks than when the task is distributed among remote blocks. The heat release frequency adder 32 may add the heat release frequency by taking into account the condition of allocation of tasks to operational blocks or the interaction of heat released from adjacent operational blocks. The heat release frequency subtractor 34 may subtract from the heat release frequency in consideration of how heat discharge proceeds around the operational block.

Referring back to Fig. 2, the hot spot detector 36 detects an operational block with its heat release frequency, held in the operational block heat release frequency register 22, exceeding a threshold value. The hot spot detector 36 informs the instruction scheduler 16 of the location of the detected operational block. The threshold value is supplied as the heat release frequency corresponding to a temperature lower than a marginal temperature at which the operational block fails to operate properly. Accordingly, the hot spot detector 36 not only detects an operational block that actually turns into a hot spot but also detects an operational block that is likely to turn into a hot spot in the future.

The instruction scheduler 16 reschedules the instructions by shifting the timing of execution by means of inserting a wait instruction before an instruction step involving for its execution the operational block determined to be a hot spot, or by giving priority to the execution of an instruction not involving for its execution the operational block determined to be a hot spot. As such, the instruction scheduler 16 performs scheduling that uses, as evaluating parameters, the quantified static/dynamic temperature characteristic of the operational blocks.

In the above-described structure, the instruction decoder 14 identifies operational blocks for each instruction step by referring to the hardware information and determines the associated heat release coefficient. Alternatively, the heat release coefficient may be embedded in the instruction as part of an operand in the process of generating the instruction code. For example, a programmer or a compiler may designate a heat release coefficient for each instruction.

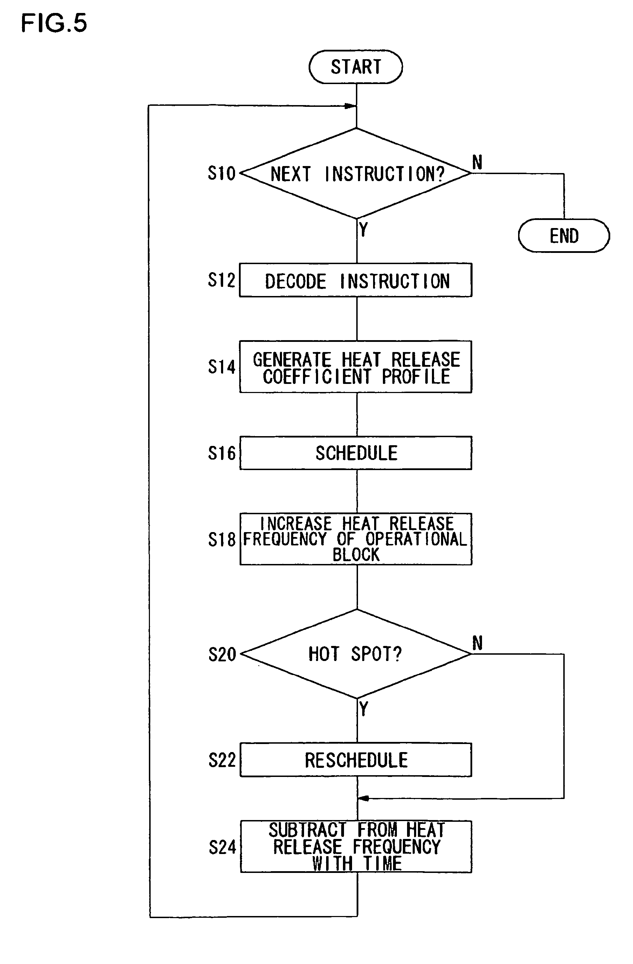

Fig. 5 is a flowchart illustrating a procedure for heat release control executed by the instruction decoder 14 and the instruction scheduler 16 of the CPU core 100.

When an instruction to be decoded next is cached in the instruction cache 12 (Y of S10), the instruction decoder 14 decodes the cached instruction (S12). The instruction decoder 14 identifies an operational block involved in the execution of the decoded instruction, determines the heat release coefficient of the involved operational block, and generates a heat release coefficient profile 20 (S14).

The instruction scheduler 16 schedules the instructions decoded by the instruction decoder 14 in accordance with the dependence of each of the instructions on data (S16). As the execution of the scheduled instruction codes proceeds, the heat release frequency adder 32 cumulatively adds the heat release coefficient to the heat release frequency of associated operational blocks held in the operational block heat release frequency register 22 (S18). In consideration of the interaction with adjacent operational blocks, the heat release frequency adder 32 may increase the amount of addition to the heat release frequency of the associated operational blocks when the heat release frequency of the adjacent operational blocks is large.

The hot spot detector 36 evaluates the heat release frequency of the operational blocks in the operational block heat release frequency register 22 so as to predict the temperature and determine whether there is any operational block that is likely to be a hot spot. When there is an operational block that is likely to be a hot spot (Y of S20), the instruction scheduler 16 reschedules the instructions by adjusting the order of execution and/or execution timing of the instructions such that the execution of an instruction involving for its execution the operational block that is likely to be a hot spot is delayed (S22).

The heat release frequency subtractor 34 subtracts from the heat release frequency of the operational blocks in the operational block heat release frequency register 22 in accordance with a predicted value of heat discharge that occurs with time (S24). Control is then returned to S10, whereupon a series of steps is repeated until there are no more instructions to be decoded (N of S10).

According to the processor system of this embodiment, the heat value is predicted block by block and step by step as the execution of instruction codes proceeds. Accordingly, the temperature distribution of the processor system package as a whole is known accurately on a very fine scale both in terms of time and space. With this, even when intensive processing load is imposed on a specific operational block of the processor system such that a sudden temperature increase is predicted, the execution of instructions involving for their execution the specific operational block is scheduled on a real time basis, with the result that heat release is prevented from reaching its peak. Localized mal-operation due to heat release is thus prevented without sacrificing the processing performance of the processor as a whole.

### Second embodiment

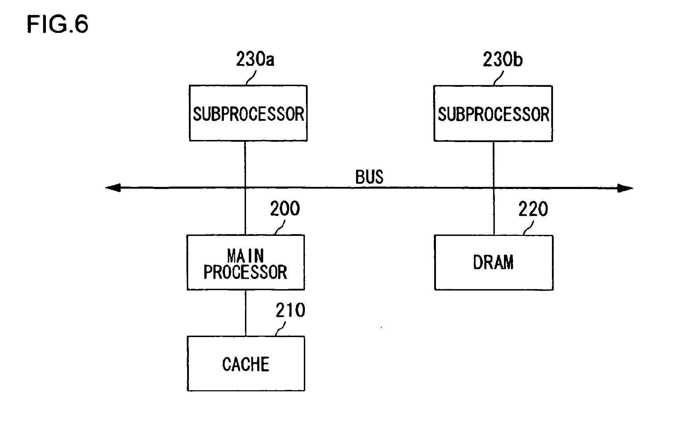

Fig. 6 illustrates the structure of a processor system according to a second example of the present invention. The processor system according to the second embodiment is a multiprocessor system including two subprocessors 230a and 230b connected to a bus, in addition to a main processor 200 corresponding to the CPU core 100 of the first embodiment. The main processor 200 accesses a DRAM 220 via the bus and reads data therefrom. The main processor 200 caches the data in the cache 210. The main processor 200 allocates tasks to the two sub-processors 230a and 230b as appropriate for execution of a program.

The main processor 200 includes various functional blocks of the CPU core 100 described in the first embodiment including the instruction cache 12, the instruction decoder 14, the instruction scheduler 16, the instruction unit 18, the heat release coefficient profile 20, the operational block heat release frequency register 22, the heat release frequency adder 32, the heat release frequency subtractor 34 and the hot spot detector 36. The following description of these blocks concerns a difference in operation from the first embodiment.

In the processor system according to the second embodiment, the heat value of the processor system package as a whole, including the modules such as the main processor 200 and the subprocessors 230a and 230b, is a subject of heat release control. Segments in each of the modules such as the main processor 200 and the subprocessors 230a and 230b represent operational blocks described in the first embodiment. Addition and subtraction of the heat release frequency for each operational block is performed as in the first embodiment.

The instruction scheduler 16 schedules the instructions by allocating instructions to the subprocessors 230a and 230b, in addition to changing the order of execution and adjusting the timing of execution as described in the first embodiment. Allocation of instructions by the instruction scheduler 16 to the subprocessors 230a and 230b may take place in units of instruction steps or in task units of certain sizes such as subroutines. The instruction scheduler 16 balances load by allocating instructions to the subprocessors 230a and 230b in accordance with the load condition. Further, the instruction scheduler 16 controls heat value by allocation adapted to the heat release condition of the operational blocks in the subprocessors 230a and 230b. For example, when an operational block that is likely to be a hot spot is detected in the subprocessor 230a, the instruction scheduler 16 allocates instructions to the subprocessor 230b.

The processor system according to this embodiment prevents a hot spot from being created in the processor system by averaging the temperature distribution in the whole processor system by allocating tasks to the subprocessors 230a and 230b in accordance with the heat release condition of the operational blocks in the subprocessors 230a and 230b.

Described above is a description based on the embodiments. The embodiment is only illustrative in nature and it will be obvious to those skilled in the art that variations in constituting elements and processes are possible within the scope of the present invention.

Such variations will be described in the following section. In the described embodiments, a method as a countermeasure for heat release is described in which instructions are scheduled so that an operational block that is likely to be a hot spot is not heavily loaded. Alternatively, an operational block that is likely to be a hot spot may be cooled locally by a cooling nozzle. When heat release from an operational block cannot be controlled by instruction scheduling, an emergency measure may be taken. For example, the operating frequency of the whole processor may be reduced or the power supply voltage may be lowered.

In the described embodiments, heat value is estimated by running a simulator when designing a circuit and information on heat release coefficient is provided in the processor as hardware information. Alternatively, a sensor for measuring processor temperature may be provided so that heat release control according to scheduling described in the embodiments is performed by locally measuring the temperature of the operational blocks.

In the described embodiments, heat value is predicted for each instruction step and the heat release frequency is counted. Alternatively, heat value may be predicted in task units of certain sizes such as subroutines so that the heat release frequency may be counted accordingly. Also, scheduling may be performed in task units instead of in units of instruction steps. There may be provided a switching control unit that switches between task-by-task scheduling and instruction-by-instruction scheduling. When the operational blocks of the processor are within a relatively safe temperature range, the heat release frequency counted in task units may be referred to for task-by task scheduling. When the temperature rises to a critical level, the heat release frequency of the operational blocks may be counted in units of instruction steps for fine-scale instruction-by-instruction scheduling.

In the described embodiments, heat release control is performed by the hardware of the processor system. Alternatively, an instruction code generator may be provided outside the processor system. In this case, instruction scheduling based on the analysis of instruction codes and the prediction of temperature may be performed as a software process outside the processor system so that the scheduled instructions are supplied to the processor.

There may be provided a checking unit which generates a heat release characteristic profile of each application, and which corrects profile information such as heat release coefficient by checking the profile against the temperature distribution actually measured by a temperature sensor on the chip. With this, the precision in heat release control is further improved.

The processor according to the embodiments may be mounted on a substrate together with other components such as a memory so as to form a processor system. An information processing apparatus may be formed in which such a processor system is installed. A personal computer and a variety of portable equipment are examples of such information processing apparatuses.

### INDUSTRIAL APPLICABILITY

The present invention is applicable to the field of heat control in a processor.

## Claims

1. A processor fabricated as a chip in which the area occupied by the processor chip is segmented into blocks subject to heat release control, each block having, in operation, a localized peak in heat release, the processor comprising:
a heat release frequency holding unit (22) which holds a heat release frequency of a plurality of the blocks, the heat release frequency being a count to which a heat release coefficient is cumulatively added;
a heat release coefficient profile (20) which stores, in correspondence with each other, an instruction to be executed, a block involved in the execution of the instruction and a heat release coefficient related to a heat value of the involved block, the heat release coefficient being a numerical value determined from a predicted value of heat generated when the involved block executes the instruction;
a heat release identifying unit (14) which identifies, by referring to the heat release coefficient profile, a block involved in the execution of each execution unit comprising at least one instruction, and which identifies a heat release coefficient related to a heat release value of the identified block; and
a heat release frequency adder unit (32) which reads the current heat release frequency of the identified block from the heat release frequency holding unit (22) and cumulatively adds the identified heat release coefficient to the current heat release frequency for that block, as the execution of instructions proceeds step by step.

2. The processor according to claim 1, wherein the heat release identifying unit (14) is a decoder (14) for decoding instructions to be executed.

3. The processor according to claim 1 or claim 2, further comprising a heat release frequency subtractor unit (34) which subtracts from the heat release frequency of the blocks in accordance with heat discharge that occurs with time.

4. The processor according to claim 3, wherein the heat release frequency subtractor unit (34) subtracts such that the larger the heat release frequency of the operational block, the larger the amount of subtraction.

5. A temperature control method for a processor fabricated as a chip in which the area occupied by the processor chip is segmented into blocks subject to heat release control, each block having, in operation, a localized peak in heat release, the method comprising the steps of:
holding, in a heat release frequency holding unit (22), a heat release frequency of a plurality of the blocks, the heat release frequency being a count to which a heat release coefficient is cumulatively added;
referring to a heat release coefficient profile (20) which stores, in correspondence with each other, an instruction to be executed, a block involved in the execution of the instruction and a heat release coefficient related to a heat value of the involved block, the heat release coefficient being a numerical value determined from a predicted value of heat generated when the involved block executes the instruction, to identify a block involved in the execution of each execution unit comprising at least one instruction, and to identify a heat release coefficient related to a heat release value of the identified block; and
reading the current heat release frequency of the identified block from the heat release frequency holding unit (22) and cumulatively adding the identified heat release coefficient to the current heat release frequency for that block, as the execution of instructions proceeds step by step.

6. A program which, when executed by a computer, causes a computer to execute the steps of the method of claim 5.

7. A recording medium which stores a program according to claim 6.

## Patentansprüche

1. Prozessor, der als ein Chip hergestellt ist, wobei der durch den Prozessorchip belegte Bereich in Blöcke segmentiert ist, die Gegenstand einer Wärmefreisetzungssteuerung sind, wobei jeder Block im Betrieb eine lokalisierte Spitze in der Wärmefreisetzung aufweist, wobei der Prozessor umfasst:
eine Wärmefreisetzungshäufigkeits-Halteeinheit (22), die eine Wärmefreisetzungshäufigkeit einer Mehrzahl der Blöcke festhält, wobei die Wärmefreisetzungshäufigkeit ein Zählwert ist, zu dem ein Wärmefreisetzungs-Koeffizient kumulativ addiert wird;
ein Wärmefreisetzungs-Koeffizientenprofil (20), welches in Übereinstimmung miteinander einen auszuführenden Befehl, einen Block, der in die Ausführung des Befehls involviert ist, und einen Wärmefreisetzungs-Koeffizienten speichert, der auf einen Wärmewert des involvierten Blocks bezogen ist, wobei der Wärmefreisetzungs-Koeffizient ein numerischer Wert ist, der aus einem vorhergesagten Wert von erzeugter Wärme bestimmt ist, wenn der involvierte Block den Befehl ausführt;
eine Wärmefreisetzungs-Identifizierungseinheit (14), die durch Bezugnahme auf das Wärmefreisetzungs-Koeffizientenprofil einen Block identifiziert, der in die Ausführung jeder Ausführungseinheit involviert ist, welche zumindest einen Befehl umfasst, und die einen Wärmefreisetzungs-Koeffizienten identifiziert, welcher sich auf einen Wärmefreisetzungswert des identifizierten Blocks bezieht;
und eine Wärmefreisetzungshäufigkeits-Addierereinheit (32), welche die gegenwärtige Wärmefreisetzungshäufigkeit des identifizierten Blocks aus der Wärmefreisetzungshäufigkeits-Halteeinheit (22) liest und kumulativ den identifizierten Wärmefreisetzungs-Koeffizienten zu der gegenwärtigen Wärmefreisetzungshäufigkeit für den betreffenden Block addiert, wenn die Ausführung von Befehlen Schritt für Schritt fortschreitet.

2. Prozessor nach Anspruch 1, wobei die Wärmefreisetzungs-Identifizierungseinheit (14) ein Decoder (14) zum Decodieren von auszuführenden Befehlen ist.

3. Prozessor nach Anspruch 1 oder 2, ferner umfassend eine Wärmefreisetzungshäufigkeits-Subtrahiereinheit (34), die von der Wärmefreisetzungshäufigkeit der Blöcke entsprechend einer Wärmeabfuhr subtrahiert, welche mit der Zeit auftritt.

4. Prozessor nach Anspruch 3, wobei die Wärmeabführhäufigkeits-Subtrahiereinheit (34) derart subtrahiert, dass der Betrag der Subtraktion umso größer ist, je größer die Wärmefreisetzungshäufigkeit des operativen Blocks ist.

5. Temperatursteuerungsverfahren für einen Prozessor, der als ein Chip hergestellt ist, wobei der durch den Prozessorchip belegte Bereich in Blöcke segmentiert ist, die Gegenstand einer Wärmefreisetzungssteuerung sind, wobei jeder Block im Betrieb eine lokalisierte Spitze in der Wärmefreisetzung besitzt, wobei das Verfahren die Schritte umfasst:
Festhalten einer Wärmefreisetzungshäufigkeit einer Mehrzahl der Blöcke in einer Wärmefreisetzungshäufigkeits-Halteeinheit (22), wobei die
Wärmefreisetzungshäufigkeit ein Zählwert ist, zu dem ein Wärmefreisetzungs-Koeffizient kumulativ addiert wird;
Bezugnehmen auf ein Wärmefreisetzungs-Koeffizientenprofil (20), welches in Übereinstimmung miteinander einen auszuführenden Befehl, einen Block, der in die Ausführung des Befehls involviert ist, und einen Wärmefreisetzungs-Koeffizienten speichert, der sich auf einen Wärmewert des involvierten Blocks bezieht, wobei der Wärmefreisetzungs-Koeffizient ein numerischer Wert ist, der aus einem vorhergesagten Wert von erzeugter Wärme bestimmt wird, wenn der involvierte Block den Befehl ausführt, um einen Block zu identifizieren, der in die Ausführung jeder Ausführungseinheit involviert ist, die zumindest einen Befehl umfasst, und um einen Wärmefreisetzungs-Koeffizienten zu identifizieren, der sich auf einen Wärmefreisetzungswert des identifizierten Blocks bezieht;
und Lesen der gegenwärtigen Wärmefreisetzungshäufigkeit des identifizierten Blocks aus der Wärmefreisetzungshäufigkeits-Halteeinheit (22) und kumulatives Addieren des identifizierten Wärmefreisetzungs-Koeffizienten zu der gegenwärtigen Wärmefreisetzungshäufigkeit für den betreffenden Block, wenn die Ausführung von Befehlen Schritt für Schritt fortschreitet.

6. Programm, welches dann, wenn es durch einen Computer ausgeführt wird, einen Computer veranlasst, die Schritte des Verfahrens von Anspruch 5 auszuführen.

7. Aufzeichnungsmedium, welches ein Programm gemäß Anspruch 6 speichert.

## Revendications

1. Processeur fabriqué comme une puce dans lequel la zone occupée par la puce du processeur est segmentée en blocs soumis à une régulation du dégagement de chaleur, chaque bloc ayant, pendant qu'il fonctionne, un pic localisé de dégagement de chaleur, le processeur comprenant :
une unité de maintien de la fréquence de dégagement de chaleur (22) qui maintient la fréquence de dégagement de chaleur d'une pluralité de blocs, ladite fréquence de dégagement de chaleur étant une valeur à laquelle un coefficient de dégagement de chaleur est ajouté de manière cumulative ;
un profil de coefficient de dégagement de chaleur (20) qui stocke, en correspondance les uns avec les autres, une instruction à exécuter, un bloc impliqué dans l'exécution de ladite instruction, et un coefficient de dégagement de chaleur associé à une valeur de chaleur du bloc impliqué, le coefficient de dégagement de chaleur étant une valeur numérique déterminée à partir d'une valeur prédite de chaleur générée lorsque le bloc impliqué exécute ladite instruction ;
une unité d'identification de dégagement de chaleur (14) qui identifie, en référence au profil de coefficient de dégagement de chaleur, un bloc impliqué dans l'exécution de chaque unité d'exécution comprenant au moins une instruction, et qui identifie un coefficient de dégagement de chaleur lié à une valeur de dégagement de chaleur du bloc identifié ; et
une unité d'addition de fréquence de dégagement de chaleur (32) qui lit la fréquence de dégagement de chaleur actuelle du bloc identifié à partir de l'unité de maintien de fréquence de dégagement de chaleur (22) et ajoute de manière cumulative le coefficient de dégagement de chaleur identifié à la fréquence de dégagement de chaleur actuelle pour ce bloc, au fur et à mesure de l'exécution des instructions étape par étape.

2. Processeur selon la revendication 1, dans lequel l'unité d'identification de dégagement de chaleur (14) est un décodeur (14) destiné à décoder des instructions à exécuter.

3. Processeur selon la revendication 1 ou 2, qui comprend en outre une unité de soustraction de fréquence de dégagement de chaleur (34) qui effectue des soustractions de la fréquence de dégagement de chaleur des blocs selon la dissipation de chaleur qui a lieu au fil du temps.

4. Processeur selon la revendication 3, dans lequel l'unité de soustraction de fréquence de dégagement de chaleur (34) effectue des soustractions afin que, plus la fréquence de dégagement de chaleur du bloc opérationnel est élevée, plus la quantité de soustraction soit importante.

5. Procédé de régulation thermique destiné à un processeur fabriqué comme une puce dans lequel la zone occupée par la puce du processeur est segmentée en blocs soumis à une régulation du dégagement de chaleur, chaque bloc ayant, pendant qu'il fonctionne, un pic localisé de dégagement de chaleur, le procédé comprenant les étapes consistant à :
maintenir, dans une unité de maintien de fréquence de dégagement de chaleur (22), une fréquence de dégagement de chaleur d'une pluralité de blocs, la fréquence de dégagement de chaleur étant une valeur à laquelle un coefficient de dégagement de chaleur est ajouté de manière cumulative ;
en référence à un profil de coefficient de dégagement de chaleur (20) qui stocke, en correspondance les uns avec les autres, une instruction à exécuter, un bloc impliqué dans l'exécution de ladite instruction, et un coefficient de dégagement de chaleur associé à une valeur de chaleur du bloc impliqué, le coefficient de dégagement de chaleur étant une valeur numérique déterminée à partir d'une valeur prédite de chaleur générée lorsque le bloc impliqué exécute ladite instruction, identifier un bloc impliqué dans l'exécution de chaque unité d'exécution comprenant au moins une instruction, et identifier un coefficient de dégagement de chaleur lié à une valeur de dégagement de chaleur du bloc identifié ; et
lire la fréquence de dégagement de chaleur actuelle du bloc identifié à partir de l'unité de maintien de fréquence de dégagement de chaleur (22) et ajouter de manière cumulative le coefficient de dégagement de chaleur identifié à la fréquence de dégagement de chaleur réelle pour ce bloc, au fur et à mesure de l'exécution des instructions étape par étape.

6. Programme qui, lorsqu'il est exécuté par un ordinateur, permet à un ordinateur d'exécuter les étapes du procédé selon la revendication 5.

7. %apport d'enregistrement qui stocke un programme selon la revendication 6.
